(19) Europäisches Patentamt
European Patent Office
Office européen des brevets

(11) **EP 4 633 053 A1**

(12) **EUROPÄISCHE PATENTANMELDUNG**

(43) Veröffentlichungstag:
**15.10.2025 Patentblatt 2025/42**

(21) Anmeldenummer: **25170001.9**

(22) Anmeldetag: **11.04.2025**

(51) Internationale Patentklassifikation (IPC):
**H04B 7/06** (2006.01)    **G06N 10/00** (2022.01)
**G06N 10/60** (2022.01)    **H04B 7/08** (2006.01)

(52) Gemeinsame Patentklassifikation (CPC):
**H04B 7/0617; G06N 10/00; G06N 10/60;
H04B 7/086**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **12.04.2024 DE 102024110347**

(71) Anmelder: **Deutsches Zentrum für Luft- und
Raumfahrt e.V.
53227 Bonn-Oberkassel (DE)**

(72) Erfinder:
• **Huber, Sigurd
87719 Mindelheim (DE)**
• **Glatting, Kay
82269 Geltendorf (DE)**
• **Krieger, Gerhard
82131 Gauting (DE)**

(74) Vertreter: **Kröncke, Rolf
Meissner Bolte
Patentanwälte Rechtsanwälte
Partnerschaft mbB
Plathnerstraße 3A
30175 Hannover (DE)**

(54) **VERFAHREN ZUR EINSTELLUNG DER RICHTCHARAKTERISTIK PHASENGESTEUERTER MEHRKANALANTENNEN UND ANTENNENSTRAHLFORMUNGSEINRICHTUNG**

(57) Es wird ein Verfahren und eine Antennenstrahlformungseinrichtung zur Einstellung der Richtcharakteristik phasengesteuerter Mehrkanalantennen durch Steuerung der Phasen ($\phi_i$) für die Signale der einzelnen Antennen ($A_i$) beschrieben, um eine vorgegebene Antennencharakteristik ($\tilde{G}(\vartheta)$) zu erreichen. Dabei werden die Phasen ($\phi_i$) mit einem Quantensuchalgorithmus bestimmt, indem mit einem Quantenorakel geprüft wird, ob die Antennencharakteristik ($G(\vartheta)$) für Phasen ($\phi_i$) und Antennenfernfelder ($a_i(\vartheta)$) die Bedingungen an die ge- wünschte, vorgegebene Antennencharakteristik ($\tilde{G}(\vartheta)$) erfüllen. Die Antennenstrahlformungseinrichtung ist zur Ausführung eines Quantensuchalgorithmus eingerichtet. Der Quantensuchalgorithmus ist zur Bestimmung der zur Steuerung genutzten Phasen ($\phi_i$) durch Prüfung der Erfüllung eines Quantenorakels eingerichtet, ob die Antennencharakteristik ($G(\vartheta)$) für Phasen ($\phi_i$) und Antennenfernfelder ($a_i(\vartheta)$) der einzelnen Antennen ($A_i$) die Bedingungen an die gewünschte vorgegebene Antennencharakteristik ($\tilde{G}(\vartheta)$) erfüllen.

Fig. 1

**Beschreibung**

Die Erfindung betrifft ein Verfahren zur Einstellung der Richtcharakteristik phasengesteuerter Mehrkanalantennen durch Bestimmen der Phasen $\phi_i$ für die Antennenfernfelder $a_i(\vartheta)$ der einzelnen Antennen, um eine vorgegebene Antennencharakteristik $\tilde{G}(\vartheta)$ zu erreichen.

Die Erfindung betrifft weiterhin eine Antennenstrahlformungseinrichtung hierzu.

Antennen spielen eine zentrale Rolle in einer Vielzahl von Anwendungsgebieten, bei der es um das Senden und Empfangen elektromagnetischer Signale geht. Ein Beispiel ist die Kommunikationstechnik, angefangen beim Mobilfunk bis hin zu Satellitenfernsehen. Ein weiteres großes Anwendungsfeld ist die Radartechnik. Moderne Antennen sind dabei mit mehreren Kanälen ausgestattet, die bezüglich der Signalamplituden $g_i$, sowie der Signalphasen $\phi_i$ steuerbar sind.

Ein herausfordernder Spezialfall sind hierbei mehrkanalige Antennen die zum Senden so betrieben werden, dass nur die Phasen $\phi_i$ gesteuert werden und die Amplituden $g_i$ konstant gelassen werden (dabei soll gelten $g_i = 1$). Ziel ist es nun, einen Satz an Phasen so zu wählen, dass die Mehrkanalantenne mit einer bestimmten vordefinierten Zielcharakteristik (auch als Antennenpattern bezeichnet) abstrahlt. In englischsprachigen Veröffentlichungen wird diese Art Patternoptimierung als ,phase-only pattern synthesis' bezeichnet.

Mathematisch lässt sich das Optimierungsproblem wie folgt beschreiben: Ausgehend von der Definition des Antennenpatterns, d. h. der Dämpfung- bzw. Verstärkung (Englisch 'gain' G) in dB über den Elevationswinkel $\vartheta$

$$G_{\text{Tx}}(\vartheta) = \frac{1}{n_{\text{c}}} \left| \sum_{i=1}^{n_{\text{c}}} \text{e}^{\text{i}\phi_i} a_i(\vartheta) \right|^2 \tag{1}$$

lassen sich für die oben genannten Anforderungen an das Antennendiagramm mathematische Bedingungen

$$G_{\text{Tx}}(\vartheta_l) \geq \tilde{G}(\vartheta_l) \ , \tag{2}$$

$$G_{\text{Tx}}(\vartheta_m) \leq \tilde{G}(\vartheta_m) \ , \tag{3}$$

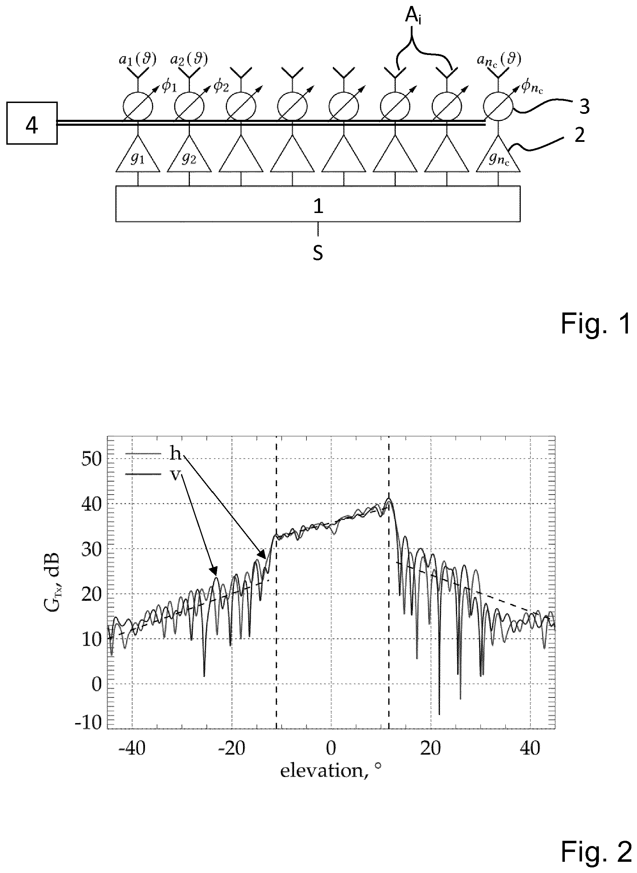

formulieren, die erfüllt sein müssen, wobei auf der rechten Seite der Ungleichungen jeweils die Zielantennenpatterns $\tilde{G}$ stehen, die den schrägen gestrichelten Linien in der Figur 2 entsprechen. Dabei ist Ungleichung (2) die Bedingung für den Hauptstrahl und Ungleichung (3) die Bedingung an die Nebenkeulen. Die Indizes $l$ und $m$ deuten an, dass es sich um diskrete Winkel handelt. Diese Formulierung wird auch als feasibility-Problem bezeichnet.

Typischerweise werden alle Arten von Antennenoptimierungsproblemen mittels Computeralgebrasystemen als Computerprogramme auf klassischen Digitalcomputern gelöst. Das hier adressierte Optimierungsproblem zielt auf die Berechnung von $n_{\text{C}}$ reell-wertigen Phasen $\phi_i$, wobei $n_{\text{C}}$ die Anzahl der Antennenkanäle ist.

Auf einem digitalen Computer werden reelle Zahlen immer durch ihre binäre Repräsentation approximiert, d. h. es gibt eine endliche Menge an Zahlen, die ein Computer darstellen kann. Der Problemraum wird also einerseits durch die Anzahl der Antennenkanäle aufgespannt und andererseits durch eine Menge an diskreten Phasenwerten $n_{\text{b}}$ im Intervall zwischen Null und $2\pi$ pro Kanal. Der Suchraum hat also die Dimension $n_{\text{C}} \cdot n_{\text{b}}$. Grundsätzlich lässt sich also der Ansatz verfolgen, den gesamten Problemraum zu durchsuchen, also jede Kombination von Phasenwerten in die Gleichungen (1) bis (3) einzusetzen und auszuwerten. Allerdings ist so ein Vorgehen für praktisch relevante Probleme nicht zielführend, da der Problemraum viel zu groß ist. Wenn auf diese Weise zum Beispiel eine Antenne mit 50 Kanälen und 6-bit Phasenquantisierung optimiert werden soll, müssten $2^{300}$ Phasenkombinationen ausgewertet werden.

Auf klassischen Computern werden Algorithmen zur Lösung solcher Probleme typischerweise in einer Fließkommaarithmetik ausgeführt, d. h. die reell-wertigen Phasen werden binär mit einer bestimmten Wortbreite approximiert. Das heißt, die meisten Verfahren betrachten diese Problemstellung als kontinuierliches Optimierungsproblem. Grundsätzlich sind alle heutigen Algorithmen zur Lösung solcher Antennenoptimierungsprobleme iterative Verfahren, die nachfolgend vorgestellt werden.

Ausgehend von einer Parameterinitialisierung, bei der beispielsweise ein Startwert festgelegt wird, folgt die eigentliche Routine, bei der nach einer bestimmten Vorschrift der Problemraum durchsucht wird. Der Algorithmus endet, wenn eine bestimmte Zahl an Iterationen durchlaufen wurde, oder wenn ein anderes Abbruchkriterium erfüllt ist.

Es sind verschiedene Optimierungsverfahren für die Synthese von Antennendiagrammen bekannt. Dabei kann die Optimierung nur auf die Phasen als Optimierungsvariablen beschränkt werden.

J. DeFord and O. Gandhi, "Phase-Only Synthesis of Minimum Peak Sidelobe Patterns for Linear and Planar Arrays," IEEE Transactions on Antennas and Propagation, vol. 36, no. 2, pp. 191-201, Feb 1988 und A. Densmore and Y. Rahmat-Samii, "Particle Swarm Optimized Three-Parameter Aperture Distribution for Antenna Synthesis," in IEEE Antennas and Propagation Society International Symposium, 2010, pp. 1-4 offenbaren Algorithmen für lineare und planare Gruppenantennen mit dem Ziel der Minimierung der Nebenkeulenpegel, um Interferenzen zu verringern.

F. Castella and J. Kuttler, "Optimised array antenna nulling with phase-only control," IEE Proceedings F (Radar and Signal Processing), vol. 138, pp. 241-246, Jun 1991 und F. Castella and D. Marable, "Optimized planar array antenna nulling with phase-only control," in 23rd European Microwave Conference, 1993, pp. 886-888 beschreiben einen Vektor-Newton-Algorithmus und eine iterative Gradienten-Methode, um Nullstellen zu setzen.

S. Smith, "Optimum Phase-Only Adaptive Nulling," IEEE Transactions on Signal Processing, vol. 47, no. 7, pp. 1835-1843, Jul 1999 beschreibt einen anderen Gradientenbasierte Ansatz in Form einer ‚konjugierten Gradienten-Methode'.

O. Bucci, G. D'Elia, and G. Romito, "Synthesis technique for scanning and/or reconfigurable beam reflector antennas with phase-only control," IEE Proceedings - Microwaves, Antennas and Propagation, vol. 143, pp. 402-412, Oct 1996 offenbart eine auf die Phasen als Variable beschränkte Antennenpatternsynthese für arraygespeiste Reflektoren und O. Bucci and G. D'Elia, "Power synthesis of reconfigurable conformal arrays with phase-only control," IEE Proceedings - Microwaves, Antennas and Propagation, vol. 145, pp. 131-136, Feb 1998 eine entsprechende Synthese für konforme Arrays.

O. Bucci, G. D'Etia, and G. Romito, "Optimal Synthesis of Reconfigurable Conformal Arrays with Phase Only Control," in IEEE Antennas and Propagation Society International Symposium. 1996 Digest, vol. 2, 1996, pp. 810-813 stellt das Syntheseproblem als Schnittpunktfindungsproblem dar, welches mit Hilfe eines verallgemeinerten Projektionsalgorithmus gelöst wird.

A. Trastoy and F. Ares, "Phase-only synthesis of continuous linear aperture distribution patterns with asymmetric side lobes," Electronics Letters, vol. 34, no. 20, pp. 1916-1917, Oct 1998 beschreibt eine Verallgemeinerung auf lineare Aperturantennenpattern.

S.-M. Lin, Y.-Q. Wang, and P.-L. Shen, "Phase-only Synthesis of the Shaped Beam Patterns for the Satellite Planar Array Antenna," in IEEE International Conference on Phased Array Systems and Technology, 2000, pp. 331-334 schlägt auf der Basis von Fourier-Bereichsmethoden eine Synthese von Antennenpattern mit Hilfe einer iterativen Methode mit Fourier-Analyse für planare phasengesteuerte Arrayantennen vor.

A. Capozzoli, C. Curcio, G. D'Elia, A. Liseno, D. Bresciani, and H. Legay, "Fast Phase-Only Synthesis of Faceted Reflectarrays," in 3rd European Conference on Antennas and Propagation, 2009, pp. 1329-1333 offenbart eine reine Phasensynthese auf der Grundlage eines fortschrittlichen schnellen Fourier-Transformationsalgorithmus für Reflect-Arrays. Eine weitere Verallgemeinerung auf Basis des Fourier-Kalkül ist die nicht-uniforme schnelle Fourier-Transformation (NUFFT), die im Zusammenhang mit konformen Reflect-Arrays genutzt wurde und in A. Capozzoli, C. Curcio, G. D'Elia, and A. Liseno, "Fast phase-only synthesis of conformal reflectarrays," IET Microwaves, Antennas & Propagation, vol. 4, pp. 1989-2000, Dec 2010 beschrieben wird.

Eine wichtige Klasse von Lösern sind die so genannten globalen Methoden, d. h. Algorithmen, die prinzipiell in der Lage sind, ein globales Optimum zu finden. Ein gut etablierter Algorithmus in diesem Zusammenhang ist der genetische Algorithmus, der in S. Katoch, S. S. Chauhan, and V. Kumar, "A review on genetic algorithm: past, present, and future," Multimedia Tools and Applications, vol. 80, pp. 8091-8126, Oct 2021 beschrieben wird und zu der Klasse der evolutionären Algorithmen gehört. Diese Art von Algorithmen sind heuristisch und als iterative Routinen konstruiert.

Genetische Algorithmen wurden zum Beispiel für Phase-Only-Nullsteuerung in R. Haupt, "Phase-only adaptive nulling with a genetic algorithm," IEEE Transactions on Antennas and Propagation, vol. 45, no. 6, pp. 1009-1015, Jun 1997 untersucht. K. Sabet, D. Jones, J.-C. Cheng, L. Katehi, K. Sarabaudi, and J. Harvey, "Efficient printed antenna array synthesis including coupling effects using evolutionary genetic algorithms," in IEEE Antennas and Propagation Society International Symposium, vol. 3, 1999, pp. 2084-2087 offenbart genetische Algorithmen für die Synthese von gedruckten Antennengruppen einschließlich Verkopplungseffekten. Im Bereich der drahtlosen Kommunikation werden genetische Algorithmen durch Y. Fan, R. Jin, B. Liu, and J. Geng, "Phase-only Pattern Synthesis of Antenna Arrays Based on A Modified Genetic Algorithm," in Proceedings of ISAP'04, Aug 2004 vorgestellt. A. Capozzoli and G. D'Elia, "Global Optimization and Antenna Synthesis and Diagnosis, Part Two: Applications to Advanced Reflector Antennas Synthesis and Diagnosis Techniques," Progress In Electromagnetics Research (PIER), vol. 56, pp. 233-261, 2006 beschreibt die Synthese von Reflektoroberflächen und B. Kadri, M. Boussahla, and F. T. Bendimerad, "Phase-Only Planar Antenna Array Synthesis with Fuzzy Genetic Algorithms," IJCSI International Journal of Computer Science Issues, vol. 7, no. 2, pp. 72-77, Jan 2010 ein Phase-Only-Patternsyntheseproblem, das mit Hilfe genetischer Algorithmen gelöst wird.

Eine weitere Klasse globaler Optimierungsalgorithmen sind simulierte Annealing-Ansätze, die z. B. in D. Henderson, S. H. Jacobson, and A. W. Johnson, Handbook of Metaheuristics. Boston, MA: Springer US, 2003, ch. The Theory and Practice of Simulated Annealing, pp. 287-319 beschrieben werden. Als Heuristik ahmt simuliertes Annealing das Verhalten physikalischer Systeme nach, was die Erhitzung oder Abkühlung von Materialien beinhaltet. Dieses Konzept wurde für die Phase-Only-Patternsynthese in A. Trastoy, F. Ares, and E. Moreno, "Phase-Only Control of Antenna Sum and Shaped Patterns Through Null Perturbation," IEEE Antennas and Propagation Magazine, vol. 43, no. 6, pp. 45-54, Dec 2001 beschrieben und in A. Trastoy, F. Ares, and E. Moreno, "Phase-Only Synthesis of Non-φ-Symmetric Patterns for Reflectarray Antennas with Circular Boundary," IEEE Antennas and Wireless Propagation Letters, vol. 3, pp. 246-248, 2004 für die Anwendung auf Reflect-Arrays genutzt.

Eine dritte heuristische Optimierungsmethode, die für Patternprobleme untersucht wurde, ist die Partikelschwarmoptimierung (PSO), welche bspw. in A. G. Gad, "Particle Swarm Optimization Algorithm and Its Applications: A Systematic Review," Archives of Computational Methods in Engineering, vol. 29, pp. 2531-2561, Apr 2022 offenbart ist. In J. Robinson, S. Sinton, and Y. Rahmat-Samii, "Particle Swarm, Genetic Algorithm, and their Hybrids: Optimization of a Profiled Corrugated Horn Antenna," in IEEE Antennas and Propagation Society International Symposium, vol. 1, 2002, pp. 314-317 wurde die Partikelschwarm-Optimierung und eine Hybridisierung mit einem genetischen Algorithmus für das Design von profilierten Hornantennen verwendet. Ein weiteres Beispiel, bei dem PSO für die Optimierung von arraygespeisten Reflektorantennen eingesetzt wurde, finden sich in S. Xu and Y. Rahmat-Samii, "Multi-objective Particle Swarm Optimization for High Performance Array and Reflector Antennas," in IEEE Antennas and Propagation Society International Symposium, 2006, pp. 3293-3296 und mit Anwendung auf die Synthese von Aperturverteilungen in A. Densmore and Y. Rahmat-Samii, "Particle Swarm Optimized Three-Parameter Aperture Distribution for Antenna Synthesis," in IEEE Antennas and Propagation Society International Symposium, 2010, pp. 1-4.

US 8,988,279 B2 offenbart ein Verfahren zur Reduzierung von Nebenkeulenstörungen in einem Radar- oder Kommunikationssystem. Das Verfahren umfasst die Auswahl eines gewünschten Amplitudengewichts, das auf Radar-oder Kommunikationsantennenelemente angewendet werden soll, und das Bestimmen von Phasengewichten für die Radar- oder Kommunikationssystemelemente, so dass jedes Paar benachbarter, phasengewichteter Elemente bei der Summierung das gewünschte Amplitudengewicht liefert.

US 10,788,578 B2 beschreibt eine Antennenpattern-Synthetisierungsvorrichtung, die ein Antennenpattern synthetisiert, indem sie den QPSO-Algorithmus (Quantum-Behaved Particle Swarm Optimization) auf ein Satellitenradar mit synthetischer Apertur (SAR) anwendet. Das SAR-System umfasst ein Antennenarray, in dem mehrere Antennen in einer mehrdimensionalen Struktur angeordnet sind, und einen Generator, der zum Berechnen einer Signalamplitude und einer Signalphase für das Antennenarray konfiguriert ist, um mithilfe von QPSO ein erstes Antennenpattern zu erzeugen. Das erste Antennenpattern wird in der entworfenen Maskenvorlage basierend auf der berechneten Signalamplitude und der berechneten Signalphase erzeugt.

US 9,553,363 B2 offenbart eine Vorrichtung zur Optimierung der Übertragung und des Empfangs von Strahlung durch Elemente in einer phasengesteuerten Gruppenantenne auf der Grundlage eines vorhergesagten zukünftigen Gesundheitszustands für Elemente in der phasengesteuerten Gruppenantenne. Die Vorrichtung hat einen Optimierer für phasengesteuerte Gruppenantennen, der konfiguriert ist, um verschiedene Zeiträume zu identifizieren, in denen Elemente einer phasengesteuerten Gruppenantenne voraussichtlich genutzt werden, um vorausgesagte zukünftige Gesundheitszustände für die Elemente in der phasengesteuerten Gruppenantenne für die identifizierten Zeiträume zu identifizieren, und verschiedene Konfigurationen für die Elemente für die identifizierten vorhergesagten zukünftigen Gesundheitszustände zu identifizieren, um ein Strahlungsmuster auf der Grundlage der vorhergesagten zukünftigen Gesundheitszustände für die Elemente zu erzeugen. Dabei wird eine potenzielle Verschlechterung einer Gruppe der Elemente berücksichtigt. Beim Identifizieren der Konfigurationen für die Elemente ist der Optimierer der phasengesteuerten Gruppenantenne so konfiguriert, dass er die Konfiguration der Elemente optimiert, um das Strahlungsdiagramm auf der Grundlage der vorhergesagten zukünftigen Gesundheitszustände für die Elemente zu verwenden, wobei er die potenzielle Verschlechterung der Gruppe der Elemente berücksichtigt. Bei der Optimierung der Konfigurationen der Elemente ist der Optimierer der phasengesteuerten Gruppenantenne so konfiguriert, dass er eine Kombination von potenziellen Verschlechterungen der Gruppe der Elemente berücksichtigt.

US 10,334,454 B2 offenbart ein Kommunikationsgerät, das ein Antennenarray und einen Beamforming-Controller umfasst, der dazu konfiguriert ist, einen Satz von Beamforming-Gewichten für das Antennenarray basierend auf einem Zielstrahlungspattern mit mehreren ‚Hauptfingern' (Hauptkeulen) zu bestimmen. Der Beamforming-Controller ist dazu konfiguriert, in jeder von mehreren von Iterationen einen Suchraum von Strahlformungsgewichten für eine Vielzahl von Elementen des Antennenarrays zu identifizieren und basierend auf dem Beitrag eines oder mehrerer der Vielzahl von Elementen zu mehreren der Vielzahl von Hauptfingern, einen aktualisierten Satz von Strahlformungsgewichten im Suchraum bestimmen, um einen Unterschied zwischen einem tatsächlichen Strahlungspattern und dem Zielstrahlungspattern zu reduzieren. Das Antennenarray ist zum Senden oder Empfangen von Funksignalen basierend auf dem aktualisierten Satz von Strahlformungsgewichten konfiguriert.

US 10,656,234 B2 beschreibt ein Verfahren zum Bestimmen eines normierten Fernfeldpattern für jedes Strahlungselement einer Vielzahl von Antennenelementen auf individueller Element-für-Element-Basis. Die mehreren Antennenelemente sind einer Phased-Array-Antenne zugeordnet. Es erfolgt eine Bestimmung eines gesamten elektromagnetischen Fernfeldpatterns für die Phased-Array-Antenne auf der Grundlage einzelner normierter Element-Fernfeldpattern und auf Grundlage von Strahlformungsparametern, die einem interessierenden Ort zugeordnet sind. Das gesamte elektromagnetische Fernfeldpattern kann verwendet werden, um die Signalstärke eines von der Phased-Array-Antenne gesendeten Signals am interessierenden Ort zu bestimmen.

US 7,728,769 B2 beschreibt ein adaptives Verarbeitungsverfahren und ein System zur Störechounterdrückung in einem Phased-Array-Strahlpattern. Es wird die Amplitudenverteilung der Sendeelemente eines zweidimensionalen phasengesteuerten Arrays bestimmt. Ein gewünschtes Pattern mit niedrigen Nebenkeulen für ein lineares Array wird synthetisiert. Die Amplitudenverteilung der Sendeelemente des zweidimensionalen phasengesteuerten Arrays wird mit dem synthetisierten Pattern verglichen. Ausgewählte Elemente des zweidimensionalen Arrays werden deaktiviert, um die ermittelte Amplitudenverteilung der Sendeelemente des zweidimensionalen phasengesteuerten Arrays am besten an das synthetisierte Strahlpattern anzupassen. Es wird eine Phase-Only-Patternsynthese durchgeführt, um ein gewünschtes zweidimensionales Strahpattern mit geringen Nebenkeulen zu erzeugen, um etwaige Best-Fit-Fehler zu minimieren.

Das technische Problem für die Aufgabe, einen geeigneten Satz an Phasenwerten $\phi_i$ so zu berechnen, dass ein gewünschtes Antennendiagramm erzeugt wird, besteht in der Art wie diese Phasenwerte gefunden, bzw. optimiert werden. Typischerweise verwendet man numerische Verfahren, also mathematische Algorithmen, die auf klassischen digitalen Computern ausgeführt werden und diese Phasen automatisiert berechnen.

Tosi, L., Anselmi, N., Polo, A., Rocca, P.: Array Antenna Power Pattern Analysis Through Quantum Computing. In: 16th European Conference on Antennas and Propagation (EuCAP), 2022, S. 1-3. - ISBN 978-1-6654-1604-7 offenbart eine Analyse des Leistungsmusters, das von einem gleichmäßigen linearen Array erzeugt wird, mit Hilfe eines Quantencomputers. Die Analysemethode basiert auf dem Algorithmus der Quanten-Fourier-Transformation und den am Ausgang der Quantenberechnung beobachtbaren Werten. Dabei werden Antennenkoeffizienten nach Amplitude und Phase optimiert.

Die Nachteile der bekannten Verfahren zur Lösung des Antennenoptimierungsproblems bestehen zum einen in einer möglicherweise sehr langen Rechenzeit. Falls zum Beispiel keine feste Zahl an Iterationen, die der Optimierungsalgorithmus durchlaufen soll, vorgegeben wird, sondern ein anderes Abbruchkriterium, kann es sein, dass der Algorithmus entweder sehr lange rechnet oder zu einer unbrauchbaren Lösung konvergiert. Gradientenverfahren leiden typischerweise unter dem Problem, dass sie in lokalen Optima ‚hängen' bleiben können und damit eine sub-optimale Lösung errechnen. Globale Verfahren können prinzipiell dem globalen Optimum sehr nahekommen. In der Praxis hängt das jedoch sehr stark von der Problemgröße, der Wahl der Randbedingungen (des Zielpatterns $\tilde{G}$ und der Winkel $\vartheta_j$) und des Startpunkts, sowie von der Problemtopologie selbst ab.

Aufgabe der vorliegenden Erfindung ist es, ein verbessertes Verfahren und eine Antennenstrahlformungseinrichtung zu schaffen.

Die Aufgabe wird durch das Verfahren mit den Merkmalen des Anspruchs 1 und durch die Antennenstrahlformungseinrichtung mit den Merkmalen des Anspruchs 10 gelöst. Vorteilhafte Ausführungsformen sind in den Unteransprüchen beschrieben.

Es wird vorgeschlagen, dass die Phasen $\phi_i$ mit einem Quantensuchalgorithmus bestimmt werden, indem mit einem Quantenorakel geprüft wird, ob die Antennencharakteristik ($G(\vartheta)$) für Phasen ($\phi_i$) und Antennenfernfelder ($a_i(\vartheta)$) die Bedingungen an die gewünschte, vorgegebene Antennencharakteristik ($\tilde{G}(\vartheta)$) erfüllen.

Dabei kann die Erfüllung einer Booleschen Funktion geprüft werden, ob die Antennencharakteristik $G(\vartheta)$ für Phasen $\phi_i$ und Antennenfernfelder $a_i(\vartheta)$ die Bedingungen an die gewünschte, vorgegebene Antennencharakteristik $\tilde{G}(\vartheta)$ erfüllen.

Durch die Implementierung des Optimierungsalgorithmus zur Bestimmung der für eine vorgegebene Antennencharakteristik geeigneten Antennenparameter in einem Quantensuchalgorithmus wird eine signifikante Beschleunigung der Berechnung und eine Reduzierung der Laufzeit für die Berechnung erreicht. Damit lassen sich größere Antennenoptimierungsprobleme mit einem ähnlichen zeitlichen Aufwand lösen, wie wesentlich kleinere Probleme, die auf klassischen Computern gerade noch gelöst werden können. Unter der Problemgröße ist hier die Zahl der freien Parameter gemeint, also die Zahl der Phasenwerte. Mit Hilfe des Quantensuchalgorithmus ist es möglich, qualitativ höherwertige Lösungen zu finden.

Das Verfahren ist zur Ausführung auf gatterbasierten Quantencomputern ausgebildet und beruht auf einem Ablauf, der durch die Übertragung der dem Antennenoptimierungsproblem zugrundeliegenden Funktion auf ein Orakel, das quantenmechanisch einer Booleschen Wahr-Falsch-Prüfung unterzogen werden kann. Dabei wird die Funktionsweise von Quantencomputern ausgenutzt, die auf den quantenmechanischen Prinzipien der Superposition und der Verschränkung beruht. Damit ist es möglich, bestimmte Algorithmen in deutlicher kürzerer Zeit auszuführen im Vergleich zu klassischen Computern. Es wird die Fähigkeit von Quantencomputern ausgenutzt, den Problemraum in einer Superposition darzustellen, was klassisch nicht möglich ist. Zudem wird eine Beschleunigung der Suche nach Lösungen um den Faktor $\sqrt{N}$ möglich, im Vergleich zu einer klassischen Suche, bei der jedes Element des Problemraums ausgewertet wird. Ein Quantensuchalgorithmus hat zudem die Fähigkeit Lösungen, sofern existent, garantiert zu finden, was bei klassischen Verfahren nicht gegeben ist.

Die Aufgabe wird dabei durch einen Quantensuchalgorithmus gelöst.

Dabei ist der sogenannte Grover-Algorithmus vorteilhaft, der von Grover in L. K. Grover, "A Fast Quantum Mechanical Algorithm for Database Search," in Proceedings of the Twenty-Eighth Annual ACM Symposium on Theory of Computing, ser. STOC '96. New York, NY, USA: Association for Computing Machinery, 1996, pp. 212-219 erstmals beschrieben wurde und für den ein sogenannter Orakelquantenschaltkreis entwickelt wurde und prinzipiell zur Verfügung steht.

Dieser Orakelquantenschaltkreis kann spezifisch für die Optimierungsaufgabe zur Lösung der Gleichungen (1) bis (3) eingerichtet werden. Der Grover-Algorithmus ist in der Lage, kombinatorische Optimierungsprobleme in einer Laufzeit $O(\sqrt{N})$ zu lösen, wobei $N$ die Zahl aller möglichen Kombinationen / Lösungen ist, während ein klassisches Verfahren jede Kombination auswerten müsste und daher $O(N)$ Operationen benötigen würde. Der Grover-Algorithmus hat also eine um den Faktor $\sqrt{N}$ verkürzte Laufzeit. Dieser Geschwindigkeitsvorteil beruht auf den quantenmechanischen Prinzipien der Superposition und der Verschränkung, und damit der Fähigkeit den gesamten Problemraum gleichzeitig darzustellen. Durch wiederholtes Anwenden des Grover-Operators werden die Wahrscheinlichkeitsamplituden für Lösungen sukzessive verstärkt und die Amplituden für Nicht-Lösungen unterdrückt. Darüber hinaus findet der Grover-Algorithmus Lösungen, sofern sie existieren, garantiert.

Die Bestimmung der Phasen $\phi_i$ mit dem Quantensuchalgorithmus kann ein Aufsummieren der Ereignisse, in denen die Erfüllung des Quantenorakels mit einer Booleschen Funktion erkannt wurde, ein Vergleichen der Summe der Ereignisse mit der Anzahl der Booleschen Funktionen und ein Erkennen einer Lösung umfassen, wenn die Summe der Ereignisse gleich der Anzahl der zu prüfenden Quantenorakel ist, wobei die Phasen $\phi_i$ aus einer Summenfunktion der mit dem Booleschen Wert Eins (1) bewerteten erkannten Lösungen, bei denen die Antennencharakteristik $G(\vartheta)$ für Phasen $\phi_i$ und Antennenfernfelder $a_i(\vartheta)$ die Bedingungen an die gewünschte, vorgegebene Antennencharakteristik $\tilde{G}(\vartheta)$ erfüllt, berechnet werden.

Die Ergebnisse lassen sich in einem Quantenschaltkreis in Register einschreiben und über die Verarbeitungsstufen transportieren.

Es kann eine Initialisierung des Quantensuchalgorithmus mit einem Hadamard-Gatter in einen Superpositionszustand erfolgen. Anschließend kann ein mehrfaches Anwenden eines Grover-Operators hintereinander durchgeführt werden, um mit einem Orakelquantenschaltkreis des Grover-Operators die in dem Orakelschaltkreis implementierte Boolesche Funktion zu lösen und Lösungen von Nicht-Lösungen durch Drehungen im Hilbertraum voneinander zu trennen und einen die Lösungen enthaltenden Ausgangszustand $|\psi(\phi)\rangle$ zu erhalten.

Die gesuchten Phasen $\phi_i$ können in binären Variablen $x_{ik}$ über den Zusammenhang $\phi_i = \frac{2\pi}{2^{n_b}} \sum_{k=0}^{n_b-1} 2^k x_{ik}$, codiert sein, wobei $n_b$ die Anzahl der Antennenkanäle ist. Damit kann der Orakelquantenschaltkreis zur Ermittlung der Phasen $\phi_i$ als einzige gesuchte Variablen unter Ausnutzung einer Summenfunktion für binären Variablen $x_{ik}$ erfolgen.

Die vorgegebenen Antennenpatternfunktionen können durch vorgegebene Phasen $\bar{\phi}_i$ und vorgegebene Amplituden der Antennenfernfelder $\bar{a}_i$ für vorgegebene Elevationswinkel $\vartheta_j$ als Parameter in den Orakelquantenschaltkreis codiert sein.

Es kann ein Addieren von jeweils vorgegebenen Phasen $\bar{\phi}_i$ der Antennenfernfelder $a_i$, die von einem vorgegebenen Elevationswinkel $\vartheta_j$ abhängen, auf die ermittelten gesuchten Phasen $\phi_i$ mit einem modulo-$2\pi$ Addierer erfolgen.

Vorteilhaft ist eine Quantenfouriertransformation auf das die gesuchten Phasen $\phi_i$ enthaltenden Registers, eine feste Codierung der vorgegebenen zu addierenden Phasen $\bar{\phi}_i$ mittels Phasen-Gattern ($P(\lambda)$) und eine Anwendung einer inversen Quantenfouriertransformation, um das Summationsergebnis zu erhalten.

Das Quantenorakel kann mehrere sequentiell ausgewertete Clausen umfassen. So kann für jeden Elevationswinkel $\vartheta_j$ eine Clause vorhanden sein, die geprüft wird. Für jede Clause kann eine Boolesche Funktion mittels eines Clausenquantenschaltkreises geprüft werden. Die Rückgabewerte der Clausenquantenschaltkreise, bei denen für die jeweiligen Elevationswinkel $\vartheta_j$ die Antennencharakteristik $G(\vartheta_j)$ für Phasen $\phi_i$ und Antennenfernfelder $a_i(\vartheta_j)$ die Bedingungen an die gewünschte Antennencharakteristik ($\tilde{G}(\vartheta_j)$) erfüllen oder nicht erfüllen, werden aufsummiert und eine Lösung wird erkannt, wenn die Summe mit der Anzahl der Clausen übereinstimmt, wobei die Phasen $\phi_i$ der Lösung zur Einstellung der Richtcharakteristik phasengesteuerter Mehrkanalantennen dienen. Diese Phasen $\phi_i$ können aus dem Quantenschaltkreis ausgelesen und Phasenregeleinheiten der einzelnen Kanäle bzw. Antennen der Mehrkanalantenne zur Phasensteuerung zugeführt werden.

Der Quantensuchalgorithmus kann zur Quantisierung des Realteils und des Imaginärteils der Additionsergebnisse jeweils einer ermittelten gesuchten Phase $\phi_i$ und der zugehörigen, für einen vorgegebenen Elevationswinkel $\vartheta_j$ vorgegebenen Phase $\bar{\phi}_i$ ausgebildet sein. Damit werden bei der Lösung der komplexen Exponentialfunktion einer in dem Orakelquantenschaltkreis implementierten Funktion

$$f(\vartheta_j) := \left| \sum_{i=1}^{n_c} \bar{a}_i e^{i(\phi_i + \bar{\phi}_i)} \right|^2 \circ n_c \cdot \tilde{G}(\vartheta_j) \quad , \quad \circ \in \{\leq, \geq\}$$

separate, parallele Schaltkreise für den Realteil und Imaginärteil genutzt.

Es kann eine kaskadierte Addition der Additionsergebnisse jeweils getrennt für den Realteil und den Imaginärteil erfolgen. Durch die Kaskadierung kann der Schaltkreis leicht auf die benötigte Anzahl der Antennenkanäle angepasste werden.

Eine Antennenstrahlformungseinrichtung zur Einstellung der Richtcharakteristik phasengesteuerter Mehrkanalantennen durch Steuerung der Phasen $\phi_i$ für die Signale der einzelnen Antennen $A_i$, um einen vorgegebenen Elevationswinkel $\vartheta$ zu erreichen, ist zur Ausführung eines Quantensuchalgorithmus eingerichtet. Dabei ist der Quantensuchalgorithmus bzw. die zu dessen Durchführung eingerichtete Quantengatterschaltung zur Bestimmung der zur Steuerung genutzten Phasen $\phi_i$ durch Prüfung der Erfüllung eines Quantenorakels, ob die Antennencharakteristik $\tilde{G}(\vartheta)$ für Phasen $\phi_i$ und die Fernfelder $a_i(\vartheta)$ der einzelnen Antenne $A_i$ ein Element einer gewünschten vorgegebenen Antennencharakteristik $\tilde{G}(\vartheta)$ ist, eingerichtet.

Der Quantensuchalgorithmus kann bevorzugt als Grover-Algorithmus zur Lösung einer in einem Orakelquantenschaltkreis implementierten Funktion

$$f\left(\vartheta_j\right) := \left| \sum_{i=1}^{n_c} \bar{a}_i \mathrm{e}^{\mathrm{i}(\phi_i + \bar{\phi}_i)} \right|^2 \circ n_c \cdot \tilde{G}\left(\vartheta_j\right) \quad , \quad \circ \in \{\leq, \geq\}$$

mit der Anzahl der Kanäle $n_c$, der, die durch für einen Elevationswinkel $\vartheta$ jeweils vorgegebenen Paaren von Antennenfernfeldfunktion $\bar{a}_i$ und Phase $\bar{\phi}_i$ repräsentierten Antennenpatternfunktionen und dem gewünschten Zielantennenpattern $\tilde{G}(\vartheta_j)$ eingerichtet sein. Damit ist das Antennenoptimierungsproblem in ein Orakel eines Quantenschaltkreises eingebettet.

Eine der Anzahl der Clausen $n_d$ entsprechende Folge von Clausenquantenschaltkreisen kann jeweils mit einem nachfolgendem Summiernetzwerk und inversem Orakelquantenschaltkreis in Reihe geschaltet sein. Am Ende der Summiernetzwerke kann ein zur Erzeugung eines Abfrage-Qubits durch eine bedingte XOR-Operation ausgebildeter Operatorschaltkreis angeordnet sein.

Die Antennenstrahlformungseinrichtung kann mit Phasenregeleinheiten von Antennen einer Mehrkanalantenne verbunden und zur Phasensteuerung der Signale der Antennen eingerichtet sein. Damit lassen sich die zur Steuerung der Mehrkanalantenne bestimmten Phasen $\phi_i$ zur Erzielung einer gewünschten vorgegebenen Antennencharakteristik $\tilde{G}(\vartheta)$ nicht nur als Parametersatz vorbestimmen und in abgespeicherter Form zur Steuerung ohne Notwendigkeit einer jeweils aktuellen Neubestimmung nutzen. Vielmehr ist es auch möglich, die Parameter im laufenden Betrieb zu bestimmen und zur Steuerung zu nutzen.

Die Erfindung kann mit einem heutzutage bereits verfügbaren Quantencomputer bzw. Quantenprozessor realisiert werden. Etwaige Störungen durch Quantenrauschen und Unschärfen lassen sich durch bekannte Methoden der Quanten-Fehler-Korrektur in den Griff bekommen. Hierzu kann eine fehlertolerante Quantenlogik eingesetzt werden. Denkbar ist aber auch eine mehrfache Ausführung auf demselben oder verschiedenen Prozessoren und Fehlererkennung und ggf. Fehlerkorrektur mittels Diversity-Methoden. Diese Problematik ist im Detail in M. Nielsen, I. Chuang: Quantum Computation and Quantum Information, 10. Aufl. Cambrigde erläutert.

Die Erfindung wird nachfolgend anhand eines Ausführungsbeispiels mit den beigefügten Zeichnungen näher erläutert. Es zeigen:

Fig. 1 -    Skizze einer sogenannte Array- oder Gruppenantenne, die mit einer Antennenstrahlformungseinrichtung angesteuert wird;

Fig. 2 -    Diagramm von typischen Sendeantennenpatterns;

Fig. 3 -    Quantenschaltkreis für den Groversuchalgorithmus;

Fig. 4 -    Quantenschaltkreis für den Quantenzählalgorithmus;

Fig. 5 -    Quantenschaltkreis für den Groveroperator;

Fig. 6 -    Quantenschaltkreis für das Phase-Only-Pattern-Synthese-Orakel;

Fig. 7 -    Quantenschaltkreis für die Clausen $f(\vartheta_j)$;

Fig. 8 -    Quantenschaltkreis für einen modulo-$2\pi$ Addierer in der Realisierung nach Draper;

Fig. 9 -    Kaskadiertes Addiernetzwerk für $n_c$ = 8 Antennenkanäle;

Fig. 10-    Ausgangszustand des Grover-Ausgangszustands für ein exemplarisches Optimierungsproblem.

Figur 1 zeigt eine Skizze einer sogenannte Array- oder Gruppenantenne mit $n_c$ = 8 Kanälen in Form einer Sendeantenne, die über einen Leistungsteiler 1 mit einem Signal gespeist wird. Die Funktionen $a_i(\vartheta)$ symbolisieren hierbei die co-polaren Fernfelder der einzelnen Antennen $A_i$ bzw. Strahler als Funktion eines Winkels $\vartheta$. Bei einer Empfangsantenne werden entsprechend Signale von den Antennen $A_i$ mit einer bestimmten Richtcharakteristik empfangen und über Signalverstärker 2 und einen Leistungskoppler 1 zum Empfangssignal S zusammengeführt. Die beispielhaften Ausführungen für die Sendeantenne gelten somit gleichermaßen für eine Empfangsantenne.

Die Signalverstärker 2 verstärken oder dämpfen das jeweilige Antennensignal auf Signalamplituden $g_i$, die bei der reinen Phasensteuerung konstant gehalten werden.

Der Elevationswinkel $\vartheta$ wird mit einer Antennenstrahlformungseinrichtung A durch Einstellung der Phasen $\phi_i$ der einzelnen phasengesteuerten Antennen $A_i$ bzw. Kanäle mittels Phasenregeleinheiten 3 geregelt, um ein vorgegebenes Antennenstrahlmuster (Antennenpattern) zu erreichen.

Figur 2 zeigt ein Diagramm von typischen Sendeantennenmustern $G_{Tx}$ ("Sendeantennenpattern") für zwei Polarisationen h und v für eine satellitengestützte Fernerkundungsmission über dem Elevationswinkel $\vartheta$. Das gleiche Prinzip gilt auch für Empfangsantennen und den typischen Empfangsantennenmustern.

Der Hauptstrahl innerhalb der gestrichelten vertikalen Linien würde den Streifen am Boden beleuchten. Ziel ist es, den Hauptstrahl so zu optimieren, dass er nahe oder oberhalb einer Grenze liegt, wie durch die schräge gestrichelte Linie zwischen den beiden vertikalen gestrichelten Linien angedeutet ist. Außerhalb dieses Bereichs befinden sich die sogenannten Nebenkeulen. Häufig wird hier verlangt, dass die Nebenkeulen unter oder möglichst in der Nähe eines bestimmten Pegels bleiben sollen. Dies ist durch die schrägen gestrichelten Linien angedeutet, die von jeweils einer vertikalen gestrichelten Linie mit abnehmender Dämpfung $G_{Tx}$ [dB] abragen.

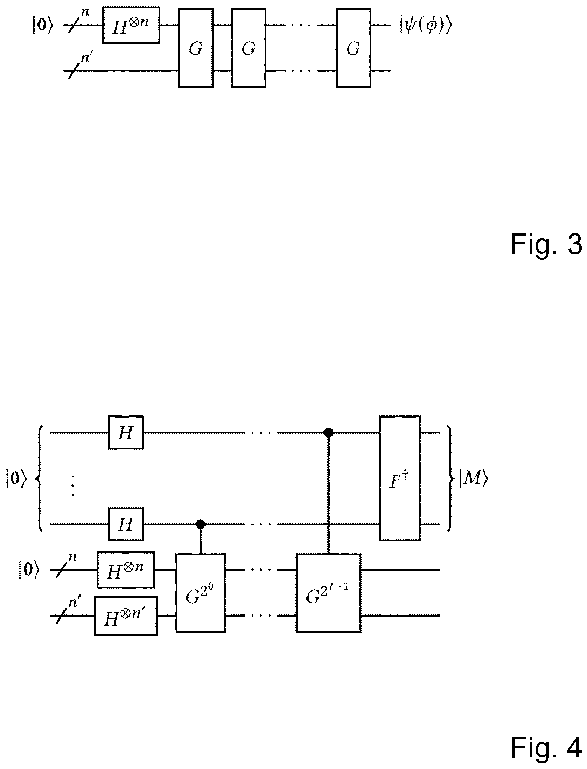

Figur 3 zeigt ein Blockdiagramm für einen Quantenschaltkreis für den GroverSuchalgorithmus. Dies ist ein iteratives Verfahren, mit dem es möglich ist, Lösungen mit einer Zahl r

$$r = \text{NINT}\left(\frac{\pi}{4\arcsin\sqrt{M/N}} - \frac{1}{2}\right) \tag{4}$$

Aufrufen des Groveroperators G zu finden. Hier bezeichnen NINT die Rundungsoperation auf die nächste ganze Zahl und $M$ die Anzahl der Lösungen. $N = 2^n$, $n = n_c \cdot n_b$, ist die gesamte Zahl an möglichen Kombinationen, wobei $n_c$ die Anzahl der Antennenkanäle bezeichnet und $n_b$ die Anzahl der Bits pro Phase.

Das Register der Wortbreite n wird ausgehend von dem Initialisierungszustand $|0\rangle$ mit Hilfe der Hadamard-Gatter

$$H = \frac{1}{\sqrt{2}}\begin{pmatrix} 1 & 1 \\ 1 & -1 \end{pmatrix} \tag{5}$$

in einen Superpositionszustand gebracht. Das Register der Wortbreite $n'$ ist hierbei ein sog. Arbeitsregister, dessen Größe vom Optimierungsproblem abhängt. Nach r-maliger Anwendung des Grover-Operators kann der Ausgangszustand $|\psi(\phi)\rangle$, der die Lösungen enthält, ausgelesen werden.

Figur 4 zeigt einen Quantenschaltkreis für den Quantenzählalgorithmus.

Da die Zahl der möglichen Lösungen $M$ a priori in der Regel unbekannt ist, kann diese über eine Zählroutine bestimmt werden, die beispielsweise in M. A. Nielsen and I. L. Chuang, Quantum Computation and Quantum Information: 10th Anniversary Edition. Cambridge University Press, 2010 beschrieben ist. Der in Figur 4 dargestellte Quantenschaltkreis nutzt dazu ein Register der Wortbreite t um diese Zahl zu speichern.

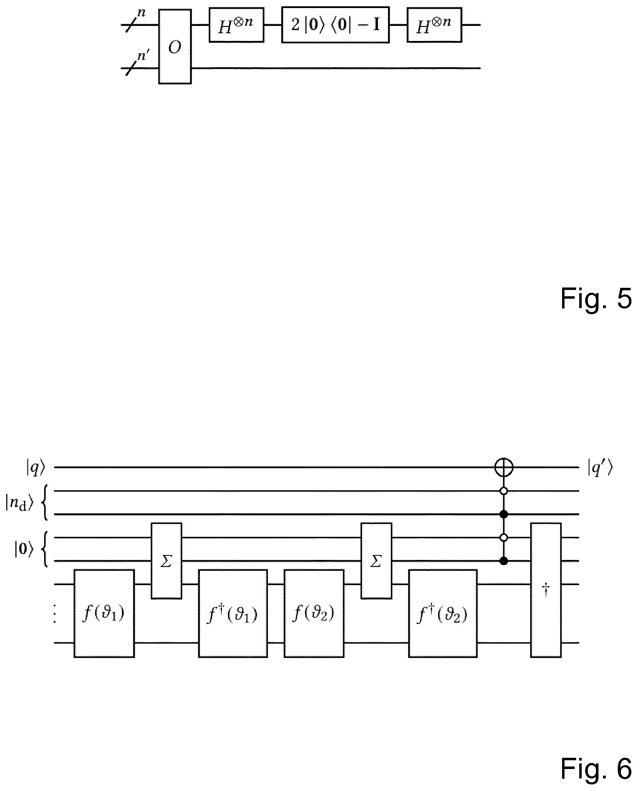

Figur 5 zeigt einen Quantenschaltkreis für den Groveroperator $G$.

Kernelement des Groveroperators $G$ ist der sog. Orakelschaltkreis O, der speziell für das Phase-Only-Pattern-Synthese-Problem entwickelt wurde und im Folgenden beschrieben wird. Hinsichtlich seiner Wirkung, trennt der Groveroperator $G$ Lösungen von Nicht-Lösungen durch Drehungen im Hilbertraum, d. h. die Wahrscheinlichkeitsamplituden von Lösungen werden verstärkt, während die Wahrscheinlichkeitsamplituden von Nicht-Lösungen gedämpft werden. Dieses Funktionsprinzip und seine geometrische Deutung ist in M. A. Nielsen and I. L. Chuang, Quantum Computation and Quantum Information: 10th Anniversary Edition. Cambridge University Press, 2010 im Detail beschrieben.

Das Design des Orakelquantenschaltkreises beruht darauf, dass das Optimierungsproblem der Gleichungen (1) bis (3) mit Hilfe der Substitution $a_i(\vartheta_j) = \overline{a}_i(\vartheta_j)e^{i\phi_i(\vartheta_j)}$ für die Antennenpatternfunktionen der einzelnen Kanäle in folgende Form gebracht werden:

$$f(\vartheta_j) := G_{\text{Tx}}(\vartheta_j)^\circ \tilde{G}(\vartheta_j) \quad , \quad {}^\circ \in \{\leq, \geq\}. \tag{6}$$

Die Funktion f ist dabei eine Boolesche Funktion, im Folgenden Clause genannt, die den Wert EINS (,1') zurückgibt, wenn sie erfüllt ist und den Wert NULL (,0'), wenn sie nicht erfüllt ist.

Setzt man Gleichung (1) mit obiger Substitution in (6) ein und multipliziert den Ausdruck mit der Anzahl der Kanäle $n_c$, stellt sich das Optimierungsproblem wie folgt dar:

$$f(\vartheta_j) := \left| \sum_{i=1}^{n_{\mathrm{c}}} \bar{a}_i \mathrm{e}^{\mathrm{i}(\phi_i + \bar{\phi}_i)} \right|^2 \circ n_{\mathrm{c}} \cdot \tilde{G}(\vartheta_j) \quad , \quad \circ \in \{\leq, \geq\} \tag{7}$$

Das Design des Orakelquantenschaltkreises ist also insofern parametrisiert, als dass die Antennenpatternfunktionen, die durch die Zahlenpaare $(\bar{a}_i, \bar{\phi}_i)$ repräsentiert sind, fest in dem Orakelquantenschaltkreis codiert sind. Die gesuchten Phasen $\phi_i$ sind in den binären Variablen $x_{ik}$ über den Zusammenhang

$$\phi_i = \frac{2\pi}{2^{n_{\mathrm{b}}}} \sum_{k=0}^{n_{\mathrm{b}}-1} 2^k x_{ik} \ , \tag{8}$$

codiert. D. h. die Groversuche operiert auf diesen Variablen und das gemessene Ergebnis wird mittels Gleichung (8) in Phasenwerte zwischen Null und $2\pi$ zurück transformiert.

Figur 6 zeigt einen Quantenschaltkreis für das Phase-Only-Pattern-Synthese-Orakel.

Aufgabe des Orakelquantenschaltkreises ist es Lösungen von Nicht-Lösungen zu unterscheiden, also den Wert EINS ('1') zurückzugeben, falls eine Variablenkombination die Ungleichungen (2) und (3) erfüllt und den Wert NULL ('0'), falls es sich nicht um eine Lösung handelt. Mathematisch entspricht dies der Wirkung

$$|q\rangle \rightarrow |q'\rangle = |q \oplus [f(\vartheta_1) \wedge f(\vartheta_2) \wedge \ldots \wedge f(\vartheta_{n_{\mathrm{d}}})]\rangle \tag{9}$$

auf das sog. querry-qubit $|q\rangle$, wobei $\oplus$ die Boolesche XOR-Operation bezeichnet.

Der Orakelquantenschaltkreis hat dann die in Figur 6 dargestellte Struktur, die am Beispiel von $n_{\mathrm{d}} = 2$ Clausen illustriert ist. Für j weitere Clausen würde der Quantenschaltkreis entsprechend mit den zusätzlichen Clausen $f(\vartheta_j)$ der inversen Anwendung der jeweiligen Clause und der zwischenliegenden Summenschaltung erweitert werden.

Das Register $|n_{\mathrm{d}}\rangle$ enthält dabei die binäre Repräsentation der Clausen (im dem hier gezeichneten Schaltkreis wäre $|n_{\mathrm{d}}\rangle = |10\rangle$). Dazu sind $\lceil \mathrm{ld}(n_{\mathrm{d}}+1) \rceil$ qubits nötig. Das nächste mit $|0\rangle$ initialisierte Register ist ein Zählregister derselben Wortbreite $\lceil \mathrm{ld}(n_{\mathrm{d}}+1) \rceil$. Im unteren Bereich der Quantenschaltung in Abb. 6 befinden sich die Quantenschaltkreise für die individuellen Clausen $f(\vartheta_j)$. Das Funktionsprinzip des Orakelquantenschaltkreises ist wie folgt: Wenn eine Clause j erfüllt ist, addiert das $j$-te Summiernetzwerk $\Sigma$ die Zahl EINS ('1') auf das Zählregister. Wenn eine Clause nicht erfüllt ist, wird der Wert NULL ('0') addiert. Am Ende der Schaltung wird die Zahl im Zählregister mit der Anzahl der Clausen im Register $|n_{\mathrm{d}}\rangle$ verglichen. Nur wenn diese Zahl gleich der dem Wert $n_{\mathrm{d}}$ ist, gibt der Orakelschaltkreis den Wert EINS ('1') für eine Lösung $x_{ik}$ zurück.

Die mit dem Dagger-Symbol bezeichneten Schaltkreise $f^\dagger(\vartheta_j)$ bezeichnen die inverse Anwendung der Clausen-Schaltkreise, die notwendig ist um die Unitarität des Orakeloperatos zu gewährleisten. Die Schaltung † ganz rechts invertiert den gesamten Schaltungsteil vor der bedingten XOR-Operation.

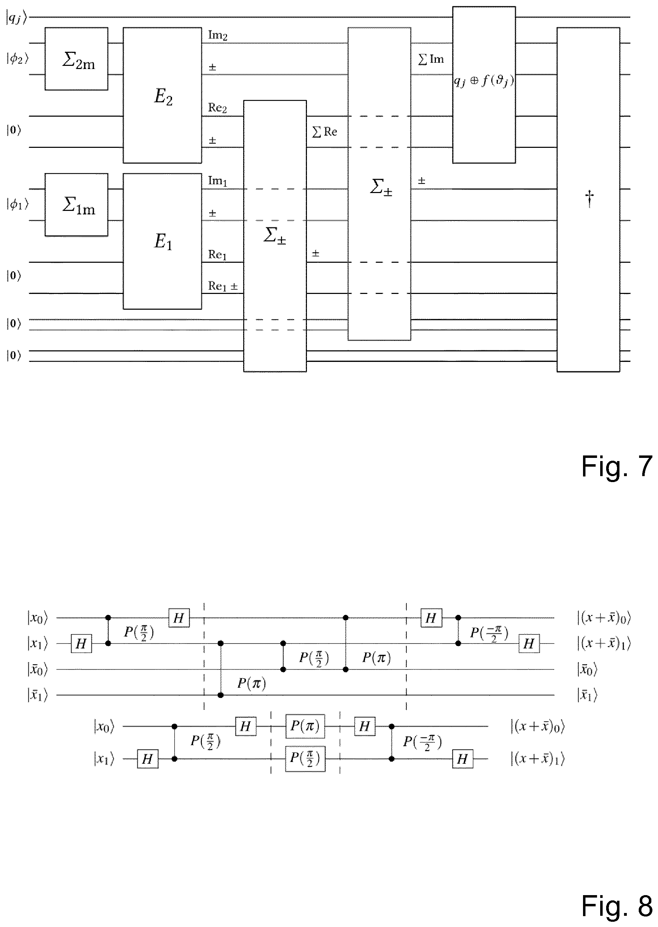

Figur 7 zeigt einen Quantenschaltkreis für die Clausen $f(\vartheta_j)$. Aufgabe der Quantenschaltkreise für die einzelnen Clausen $f(\vartheta_j)$ ist es, den Booleschen Ausdruck nach Gleichung (7) auszuwerten. Das Design dieses Quantenschaltkreises ist beispielhaft für zwei Kanäle mit zwei Bit Phasenquantisierung dargestellt.

Das $j$-te querry-qubit $|q_j\rangle$ enthält dabei den Wert des Booleschen Ausdrucks

$$|q_j\rangle \rightarrow |q_j \oplus f(\vartheta_j)\rangle \tag{10}$$

und gibt den Wert EINS ('1') zurück falls die Clause $f(\vartheta_j)$ erfüllt ist und den Wert NULL ('0'), wenn dies nicht der Fall ist. Auf der linken Seite in Figur 7 folgen jeweils, abwechselnd mit Arbeitsregistern für die komplexen Exponentialfunktionen, die Eingangsregister, die die Phasenwerte $\phi_i$ für den $i$-ten Antennenkanal in binärer Darstellung enthalten.

Figur 8 zeigt einen Quantenschaltkreis für einen modulo-$2\pi$ Addierer in der Realisierung nach Draper.

Auf diese Phasenwerte $\phi_i$ werden gemäß Gleichung (7) die festen Phasenwerte $\bar{\phi}_i$ der Antennenpatternfunktio-nen $a_i$, die jeweils vom Winkel $\vartheta_j$ abhängen, mit Hilfe der der modulo-$2\pi$ Addierer $\Sigma_{im}$ hinzuaddiert. Bewerkstelligt wird dies mit dem in Figur 8 dargestellten Quantenschaltkreis, der auf einer Beschreibung von Draper in T. G. Draper, Addition on a Quantum Computer, 2000 (https://arxiv.org/pdf/quant-ph/0008033.pdf) beruht.

Das Funktionsprinzip besteht darin, auf das erste Register eine Quantenfouriertransformation anzuwenden (erster Teil der Schaltung bis zur gestrichelten Linie). Das zweite Register, das die Phasenwerte

$$\bar{\phi}_i = \frac{2\pi}{2^{n_b}} \sum_{k=0}^{n_b-1} 2^k \bar{x}_{ik} \ , \tag{11}$$

für die Antennenpatternfunktionen enthält, erzeugt bedingte Rotationen in der Fourierbasis (mittlerer Schaltungsteil) und nach Anwendung der inversen Quantenfouriertransformation (letzter Schaltungsteil) erhält man das Summationsergebnis im oberen Register rechts im Schaltbild. Die Schaltung enthält neben Hadamardgattern sog. Phasen-Gatter

$$P(\lambda) = \begin{pmatrix} 1 & 0 \\ 0 & e^{i\lambda} \end{pmatrix} \ . \tag{12}$$

Dieser Schaltkreis wurde so modifiziert, dass die Zahlenwerte für die Antennenpattern-Phasenwerte $\bar{\phi}_i$ fest im Schaltkreis encodiert sind. Hier wurde beispielhaft der Wert $|x_1\, x_0\rangle = |01\rangle$, was nach Gleichung (11) dem dezimalen Phasenwert 90° entspricht, encodiert. Dies erlaubt es die Zahl der nötigen qubits für die Addition der Phasen zu halbieren. In entsprechender Weise könnten auch andere Phasenwerte in den Schaltkreis encodiert werden.

Auf die Addition der Phasen folgt nach Gleichung (7) die Auswertung der komplexen Exponentialfunktion, die mit dem Betrag $\bar{a}_i$ der Antennenpatternfunktion gewichtet ist. Dazu wurde der parametrisierte unitäre Operator

$$E_i = \sum_{\{\phi'\}} |a_i \exp(i\phi')\rangle\langle\phi'| \tag{13}$$

implementiert. Eingangsseitig liegt im ersten Register das Additionsergebnis $\phi' = \phi_i + \bar{\phi}_i$ an. Darüber hinaus wird eine Anzahl an Arbeitsqubits benötigt, die sich nach der Ausgangsquantisierung für Real- und Imaginärteil richtet.

In Figur 7 ist eine 2-Bit Quantisierung dargestellt, bei der das erste Bit jeweils ein Vorzeichen-Bit ist (mit $\mp$ symbolisiert). Für die Berechnung des unitären Operators wird zunächst eine Quantisierung des Real- und Imaginärteils

$$Re = a_i \cos(i\phi') \tag{14}$$
$$Im = a_i \sin(i\phi')$$

gemäß

$$\frac{a'(-1)^{x_0}}{2^{n_e-1}-1} \sum_{l=1}^{n_o-1} 2^l x_l \tag{15}$$

bestimmt. Hierbei ist $a'$ eine Normierungskonstante, mit der sich der Quantisierungsbereich skalieren lässt. $n_o$ ist die Anzahl an qubits jeweils für Real- und Imaginärteil. Die quantisierten Ausgangswerte werden dann über eine nearest-neighbor Interpolation berechnet. Die Zahl der Arbeitsqubits richtet sich nach der Anzahl identischer Ausgangsfunktionswerte und hängt von der gewählten Bit-Zahl $n_o$ der Ausgangsquantisierung ab. Für die Zahl der benötigten qubits für die komplexe Exponentialfunktion gilt:

$$n_e = 2n_o \ , \qquad falls \ \ n_o > n_b - 1 \, . \tag{16}$$

In der Zeichnung in Figur 7 ist $n_o = n_b = 2$. In Tabelle 1 ist beispielhaft der unitäre Operator nach Gleichung (13), wie in Figur 7 eingezeichnet, aufgelistet.

Tabelle 1: Unitärer Operator für die Exponentialfunktion nach Gleichung (13), wobei $a_i = 1$ gewählt wurde.

| $\phi'$ | $a_i \exp(i\phi')$ | $\phi'$ | $a_i \exp(i\phi')$ |
|---|---|---|---|
| 0, 0, 0, 0 | 0, 1, 0, 0 | 1, 0, 0, 0 | 0, 1, 1, 0 |
| 0, 0, 0, 1 | 0, 0, 0, 1 | 1, 0, 0, 1 | 0, 1, 1, 1 |
| 0, 0, 1, 0 | 1, 1, 1, 0 | 1, 0, 1,0 | 1, 0, 0, 0 |
| 0, 0, 1, 1 | 1, 0, 1, 1 | 1, 0, 1, 1 | 1, 0, 0, 1 |

(fortgesetzt)

| $\phi'$ | $a_i \exp(i\phi')$ | $\phi'$ | $a_i \exp(i\phi')$ |
|---|---|---|---|
| 0, 1, 0, 0 | 0, 0, 0, 0 | 1, 1, 0, 0 | 1, 0, 1,0 |
| 0, 1, 0, 1 | 0, 0, 1, 0 | 1, 1, 0, 1 | 1, 1, 0, 0 |
| 0, 1, 1,0 | 0, 0, 1, 1 | 1, 1, 1, 0 | 1, 1, 0, 1 |
| 0, 1, 1, 1 | 0, 1, 0, 1 | 1, 1, 1, 1 | 1, 1, 1, 1 |

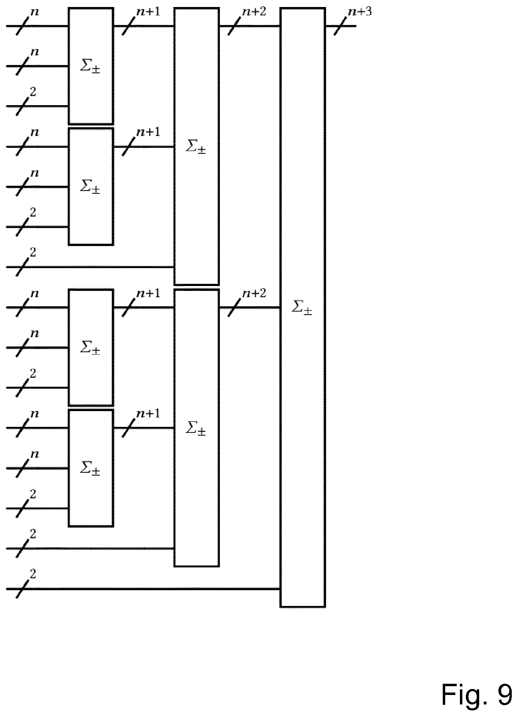

Figur 9 zeigt ein kaskadiertes Addiernetzwerk für $n_c$ = 8 Antennenkanäle.

Nach der Berechnung der parametrisierten komplexen Exponentialfunktionen für die einzelnen Antennenkanäle folgen Addiernetzwerke für Realteil $Re_j$ und Imaginärteil $Im_j$. Diese hier implementierten Addieroperatoren benötigen $2n_o$ + 2 qubits, wobei $n_o$ die Registerbreiten für die beiden zu addierenden ganzen Zahlen sind und der Zahl der Ausgangsqubits jeweils für Real- und Imaginärteil der komplexen Exponentialfunktion entsprechen. Das Addiernetzwerk lässt sich einfach durch Kaskadierung auf eine beliebige Anzahl an Antennenkanälen erweitern, wie in Figur 9 für $n_c$ = 8 Antennenkanäle dargestellt. Wenn die Zahl der Antennenkanäle eine Potenz von zwei ist, dann beträgt die Zahl der Arbeitsqubits für das Addiernetzwerk $2n_c$ - 1 jeweils für Real- und Imaginärteil.

Im vorletzten Schritt wird noch die Auswertung der Booleschen Operation nach Gleichung (10) benötigt. Der hierfür implementierte unitäre Operator realisiert dafür zunächst die Quadrierung und Summation von Real- und Imaginärteil und bildet dann die logische Operation nach den Gleichungen (7) und (10). Wie in Figur 7 dargestellt ist, werden dazu nicht die Vorzeichenbits des Addiernetzwerks benötigt. Dieser Operator ist beispielhaft in der Tabelle 2 für eine 2-Bit Quantisierung von Real- und Imaginärteil (wie in Figur 7 dargestellt) aufgelistet.

Tabelle 2: Unitärer Operator, der die Boolesche Auswertung nach den Gleichungen (7) und (10) vornimmt.

| Re, Im, $q_j$ | Re, Im, $q_j \oplus f(\vartheta_j)$ | Re, Im, $q$ | Re, Im, $q_j \oplus f(\vartheta_j)$ |
|---|---|---|---|
| 0,0,0,0,0 | 0, 0, 0, 0, 0 | 1, 0, 0, 0, 0 | 1, 0, 0, 0, 1 |
| 0, 0, 0, 0, 1 | 0, 0, 0, 0, 1 | 1, 0, 0, 0, 1 | 1, 0, 0, 0, 0 |
| 0, 0, 0, 1,0 | 0, 0, 0, 1, 0 | 1,0,0, 1,0 | 1, 0, 0, 1, 1 |
| 0, 0, 0, 1, 1 | 0, 0, 0, 1, 1 | 1, 0, 0, 1, 1 | 1, 0, 0, 1, 0 |
| 0, 0, 1, 0, 0 | 0, 0, 1, 0, 1 | 1, 0, 1, 0, 0 | 1, 0, 1, 0, 1 |
| 0, 0, 1, 0, 1 | 0,0, 1,0,0 | 1, 0, 1, 0, 1 | 1, 0, 1, 0, 0 |
| 0, 0, 1, 1, 0 | 0, 0, 1, 1, 1 | 1, 0, 1, 1, 0 | 1, 0, 1, 1, 1 |
| 0,0,1,1,1 | 0, 0, 1, 1, 0 | 1, 0, 1, 1, 1 | 1, 0, 1, 0, 0 |
| 0, 1, 0, 0,0 | 0, 1,0,0,0 | 1, 1, 0, 0, 0 | 1, 1, 0, 0, 1 |
| 0, 1, 0, 0, 1 | 0, 1, 0, 0, 1 | 1, 1, 0, 0, 1 | 1, 1, 0, 0, 0 |
| 0, 1, 0, 1, 0 | 0, 1, 0, 1, 0 | 1, 1, 0, 1,0 | 1, 1, 0, 1, 1 |
| 0, 1, 0, 1, 1 | 0, 1, 0, 1, 1 | 1, 1, 0, 1, 1 | 1, 1, 0, 1, 0 |
| 0, 1, 1, 0, 0 | 0, 1, 1, 0, 1 | 1, 1, 1, 0, 0 | 1, 1, 1, 0, 1 |
| 0, 1, 1, 0, 1 | 0, 1, 1, 0, 0 | 1, 1, 1, 0, 1 | 1, 1, 1, 0, 0 |
| 0,1,1,1,0 | 0, 1, 1, 1, 1 | 1, 1, 1, 1,0 | 1, 1, 1, 1, 1 |
| 0, 1, 1, 1, 1 | 0, 1, 1, 1, 0 | 1, 1, 1, 1, 1 | 1, 1, 1, 1, 0 |

Im letzten Schritt des Quantenschaltkreises für die Clausen $f(\vartheta_j)$ in Figur 7 werden wiederum alle Register bis auf das Register $|q_j\rangle$ auf den Anfangszustand gestellt. Dies ist durch den †-Operator symbolisiert und entspricht der inversen Anwendung der gesamten Schaltung vor der Operation $q_j \oplus f(\vartheta_j)$. Hiermit ist der gesamte Orakelquantenschaltkreis für das Phase-Only-Pattern-Synthese-Problem nach den Gleichungen (1) bis (3) vollständig charakterisiert.

Die Gesamtzahl an Qubits lässt sich wie folgt abschätzen:

$$n + n' = n_f + 2\lceil \mathrm{ld}(n_d + 1)\rceil + 1 \qquad (17)$$

$$n_f = 4(n_c - 1) + 2n_c n_o + 1$$

Im Beispiel in den Figuren 6 und 7 wurde $n_d = 2$, $n_c = 2$ und $n_o = n_b = 2$ gewählt. Damit ergeben sich $n_f = 13$ qubits für die Clausen-Quantenschaltkreise und $n + n' = 18$ qubits für den gesamten Orakelquantenschaltkreis. Es ist $n = n_c \cdot n_b$. $n'$ ist die Anzahl der Qubits für die Arbeitsregister.

Im Folgenden wird ein Demonstrationsbeispiel gegeben, das als eine numerische Simulation des Goveralgorithmus für das Phase-Only-Pattern-Synthese-Problem implementiert wurde. Hierzu wurde eine Antenne mit $n_c = 2$ Kanälen und $n_b = 2$ Bit Phasenquantisierung für eine Clause $n_d = 1$ betrachtet. Die Antennenparameter sind $\overline{a}_1 = \overline{a}_2 = 1$, sowie $\overline{\phi}_1 = 90°$ und $\overline{\phi}_2 = 180°$. Für das Zielpattern $\tilde{G}$ wurde der Wert 3/2 gewählt. Der zu optimierende Ausdruck nach Gleichung (7) hat dann die Form:

$$f := \left| \mathrm{e}^{\mathrm{i}(\phi_1 + \overline{\phi}_1)} + \mathrm{e}^{\mathrm{i}(\phi_2 + \overline{\phi}_2)} \right|^2 \geq n_c \cdot \tilde{G} \quad . \qquad (18)$$

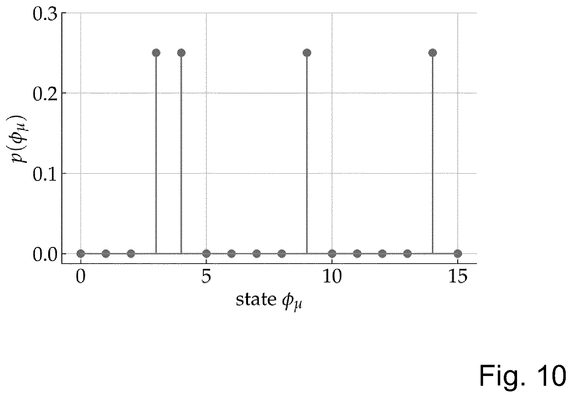

Figur 10 zeigt ein Diagramm des Ausgangszustands des Grover-Ausgangszustands für das Optimierungsproblem. Dabei ist die Wahrscheinlichkeitsverteilung (diskrete Wellenfunktion) für das Ergebnisregister des Ausgangszustands nach der Groversimulation gezeigt. Es gibt aufgrund der $2\pi$-Phasenmehrdeutigkeit, wie erwartet, vier Lösungen durch die 2-Bit Phasenquantisierung.

Zusammengefasst ist das Ergebnis in der nachfolgenden Tabelle 3, wobei hier die Phasen $\phi_1$ und $\phi_2$ in binärer und dezimaler Encodierung gegeben sind. Die letzte Spalte enthält den Antennengewinn $G_{\mathrm{Tx}}$, der die Ungleichung (18) erfüllt.

Tabelle 3: Ergebnisse der unitären Simulation für das Phase-Only-Pattern-Synthese-Problem nach Gleichung (18).

| Zustand (binär) | Zustand (dezimal) | $\phi_1$ | $\phi_2$ | $G_{\mathrm{Tx}}$ |
|---|---|---|---|---|
| 0, 0, 1, 1 | 3 | 0° | 270° | 2 |
| 0, 1, 0, 0 | 4 | 90° | 0° | 2 |
| 1, 0, 0, 1 | 9 | 180° | 90° | 2 |
| 1, 1, 1, 0 | 14 | 270° | 180° | 2 |

Die Optimierung phasengesteuerter Gruppenantennen spielt in diversen Feldern der Kommunikation, Navigation und Fernerkundung eine wichtige Rolle. Beispielsweise in der Satellitenkommunikation findet der Austausch von Informationssignalen über solche phasengesteuerter Gruppenantennen mit dynamischer Anpassung der Richtcharakteristik statt. Dies ist notwendig, wenn sich die Ausrichtung zwischen Sender und Empfänger ändern, weil sich der Kommunikationssatellit zum Beispiel in einem niedrigen Erdorbit befindet und sich daher schnell relativ zu einem Nutzer bewegt.

In der Radarfernerkundung mit synthetischen Apertur-Radaren nutzt man aktive phasengesteuerte Gruppenantennen um einen Streifen am Boden optimal auszuleuchten und Störsignale, wie Entfernungsmehrdeutigkeiten, nach Möglichkeit zu unterdrücken. Hier werden typischerweise nur die Phasen der Gruppenantenne optimiert um einerseits ein Maximum an verfügbarer Sendeleistung abzustrahlen und gleichzeitig die Sendeverstärker in der Sättigung zu betreiben.

Rundfunksatelliten mit Amplitudenmodulation nutzen phasengesteuerter Gruppenantennen um ihr Programm in bestimmten Regionen auszustrahlen und gleichzeitig die Interferenz mit anderen Gebieten zu minimieren.

Die Anwendung solcher Antennensysteme und der damit verbundenen Optimierung reicht bis hin zu Deep-Space-Missionen, wie Messenger, bei der eine phasengesteuerte Arrayantenne mit zirkular-polarisierten geschlitzten Wellenleitern zum Einsatz kam.

**Patentansprüche**

1. Verfahren zur Einstellung der Richtcharakteristik phasengesteuerter Mehrkanalantennen durch Steuerung der Phasen ($\phi_i$) für die Signale der einzelnen Antennen (A$_i$), um eine vorgegebene Antennencharakteristik $\tilde{G}(\vartheta)$ zu erreichen, **dadurch gekennzeichnet, dass** die Phasen ($\phi_i$) mit einem Quantensuchalgorithmus bestimmt werden, indem mit einem Quantenorakel geprüft wird, ob die Antennencharakteristik ($G(\vartheta)$) für Phasen ($\phi_i$) und Antennenfernfelder ($a_i(\vartheta)$) die Bedingungen an die gewünschte, vorgegebene Antennencharakteristik ($\tilde{G}(\vartheta)$) erfüllen.

2. Verfahren nach Anspruch 1, **gekennzeichnet durch** Aufsummieren der Ereignisse, in denen die Erfüllung des Quantenorakels mit einer Booleschen Funktion erkannt wurde, Vergleichen der Summe der Ereignisse mit der Anzahl der für die Mehrkanalantenne zu prüfenden Clause, welche die zu prüfende Boolesche Funktion repräsentiert, und Erkennen einer Lösung, wenn die Summe der Ereignisse gleich der Anzahl der zu prüfenden Clausen ist, wobei die Phasen ($\phi_i$) aus einer Summenfunktion der mit dem Booleschen Wert Eins (1) bewerteten erkannten Lösungen, bei denen die Antennencharakteristik ($G(\vartheta)$) für Phasen ($\phi_i$) und Antennenfernfelder ($a_i(\vartheta)$) die Bedingungen an die gewünschte Antennencharakteristik ($\tilde{G}(\vartheta)$) erfüllen, berechnet werden.

3. Verfahren nach Anspruch 1 oder 2, **gekennzeichnet durch** Initialisierung des Quantensuchalgorithmus mit einem Hadamard-Gatter in einen Superpositionszustand, mehrfaches Anwenden eines Grover-Operators hintereinander, um mit einem Orakelquantenschaltkreis des Grover-Operators die in dem Orakelquantenschaltkreis implementierte Boolesche Funktion zu lösen und Lösungen von Nicht-Lösungen durch Drehungen im Hilbertraum voneinander zu trennen und einen die Lösungen enthaltenen Ausgangszustand ($|\psi(\phi)\rangle$) zu erhalten.

4. Verfahren nach einem der Ansprüche 1 bis 3, **dadurch gekennzeichnet, dass** die gesuchten Phasen $\phi_i$ in binären Variablen $x_{ik}$ über den Zusammenhang $\phi_i = \frac{2\pi}{2^{n_b}}\sum_{k=0}^{n_b-1} 2^k x_{ik}$ , codiert sind, wobei $n_b$ die Anzahl der Bits pro Phase ist.

5. Verfahren nach Anspruch 4, **gekennzeichnet, durch** Addieren von jeweils vorgegebenen Phasen ($\bar{\phi}_i$) der Antennenfernfelder ($a_i$), die von einem vorgegebenen Elevationswinkel ($\vartheta_j$) abhängen, auf die ermittelten gesuchten Phasen ($\phi_i$) mit einem modulo-$2\pi$ Addierer.

6. Verfahren nach Anspruch 5, **gekennzeichnet durch** Quantenfouriertransformation eines die gesuchten Phasen ($\phi_i$) enthaltenden Registers, wobei eine Addition von vorgegebenen Phasen ($\bar{\phi}_i$) durch feste Codierung mittels Phasen-Gattern ($P(\lambda)$) erfolgt, und Anwendung einer inversen Quantenfouriertransformation, um das Summationsergebnis zu erhalten.

7. Verfahren nach einem der vorhergehenden Ansprüche, **dadurch gekennzeichnet, dass** das Quantenorakel mehrere sequentiell ausgewertete Clausen umfasst, wobei für jede Clause eine Boolesche Funktion mittels eines Clausenquantenschaltkreises geprüft wird und die Rückgabewerte der Clausenquantenschaltkreise, bei denen für die jeweiligen Elevationswinkel ($\vartheta_j$) die Antennencharakteristik ($G(\vartheta_j)$) für Phasen ($\phi_i$) und Antennensignalfelder ($a_i(\vartheta_j)$) die Bedingungen an die gewünschte Antennencharakteristik ($\tilde{G}(\vartheta_j)$) erfüllen oder nicht erfüllen, aufsummiert werden und eine Lösung erkannt wird, wenn die Summe mit der Anzahl der Clausen übereinstimmt, wobei die Phasen ($\phi_i$) der Lösung zur Einstellung der Richtcharakteristik phasengesteuerter Mehrkanalantennen dienen.

8. Verfahren nach einem der vorhergehenden Ansprüche, **gekennzeichnet durch** Quantisierung des Realteils und des Imaginärteils der Additionsergebnisse jeweils einer ermittelten gesuchten Phase ($\phi_i$) und der zugehörigen, für einen vorgegebenen Elevationswinkel ($\vartheta_j$) vorgegebenen Phase ($\bar{\phi}_i$).

9. Verfahren nach Anspruch 8, **gekennzeichnet durch** kaskadierte Addition der Additionsergebnisse jeweils getrennt für den Realteil und den Imaginärteil.

10. Antennenstrahlformungseinrichtung zur Einstellung der Richtcharakteristik phasengesteuerter Mehrkanalantennen durch Steuerung der Phasen ($\phi_i$) für die Signale der einzelnen Antennen ($A_i$), um einen vorgegebenen Elevationswinkel ($\vartheta$) zu erreichen, **dadurch gekennzeichnet, dass** die Antennenstrahlformungseinrichtung zur Ausführung eines Quantensuchalgorithmus eingerichtet ist, wobei der Quantensuchalgorithmus zur Bestimmung der zur Steuerung genutzten Phasen ($\phi_i$) durch Prüfung der Erfüllung eines Quantenorakels, ob die Antennencharakteristik ($G(\vartheta)$) für Phasen ($\phi_i$) und Antennensignalfelder ($a_i(\vartheta)$) der einzelnen Antennen ($A_i$) ein Element einer gewünschten vorgegebenen Antennencharakteristik ($\tilde{G}(\vartheta)$) ist, eingerichtet ist.

11. Antennenstrahlformungseinrichtung nach Anspruch 10, **dadurch gekennzeichnet, dass** der Quantensuchalgorithmus als Grover-Algorithmus zur Lösung einer in einem Orakelquantenschaltkreis implementierten Funktion

$$f(\vartheta_j) := \left| \sum_{i=1}^{n_c} \bar{a}_i e^{i(\phi_i + \bar{\phi}_i)} \right|^2 \circ n_c \cdot \tilde{G}(\vartheta_j) \quad , \quad \circ \in \{\leq, \geq\}$$

mit der Anzahl der Kanäle $n_c$, der, die durch für einen Elevationswinkel $\vartheta_j$ jeweils vorgegebenen Paaren von Antennenfernfeldfunktion $\bar{a}_i$ und Phase $\bar{\phi}_i$ repräsentierten Antennenpatternfunktionen und dem gewünschten Zielantennenpattern $\tilde{G}(\vartheta_j)$.

**12.** Antennenstrahlformungseinrichtung nach Anspruch 11, **dadurch gekennzeichnet, dass** eine der Anzahl an Clausen ($n_d$) entsprechende Folge von Clausenquantenschaltkreisen jeweils mit einem nachfolgendem Summiernetzwerk und inversem Orakelquantenschaltkreis in Reihe geschaltet sind und am Ende der Summiernetzwerke ein zur Erzeugung eines Abfrage-Qubits durch eine XOR-Operation ausgebildeter Operatorschaltkreis angeordnet ist.

**13.** Antennenstrahlformungseinrichtung nach einem der Ansprüche 10 bis 12, **dadurch gekennzeichnet, dass** die Antennenstrahlformungseinrichtung mit Phasenregeleinheiten (3) von Antennen ($A_i$) einer Mehrkanalantenne verbunden und zur Phasensteuerung der Signale der Antennen ($A_i$) verbunden ist.

Fig. 1

Fig. 2

Fig. 3

Fig. 4

Fig. 5

Fig. 6

Fig. 7

Fig. 8

Fig. 9

Fig. 10

Europäisches
Patentamt

European
Patent Office

Office européen
des brevets

## EUROPÄISCHER RECHERCHENBERICHT

Nummer der Anmeldung

EP 25 17 0001

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/358187 A1 (TRAN BAO [US] ET AL) 12. November 2020 (2020-11-12) * Zusammenfassung * * Absätze [0133], [0294] - [0315] * * Abbildungen 1G, 8 * ----- | 1-13 | INV. H04B7/06 G06N10/00 G06N10/60 H04B7/08 |
| X | LASKAR MOSTAFIZUR RAHAMAN ET AL: "A Complexity-Efficient Quantum Architecture and Simulation for Eigen Spectrum Estimation of Vandermonde System in a Large Antenna Array", IEEE TRANSACTIONS ON CIRCUITS AND SYSTEMS I: REGULAR PAPERS, IEEE, US, Bd. 70, Nr. 5, 1. Mai 2023 (2023-05-01), Seiten 2106-2119, XP011939677, ISSN: 1549-8328, DOI: 10.1109/TCSI.2023.3247886 [gefunden am 2023-02-28] * Zusammenfassung * * Abschnitte I.-VII.; Seite 2106 - Seite 2115 * * Abbildungen 1, 2 * ----- | 1-13 | |

RECHERCHIERTE SACHGEBIETE (IPC)

H04B
G06N

Der vorliegende Recherchenbericht wurde für alle Patentansprüche erstellt

| Recherchenort | Abschlußdatum der Recherche | Prüfer |
|---|---|---|
| München | 29. Juli 2025 | Helms, Jochen |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 17 0001

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-2025

| Im Recherchenbericht angeführtes Patentdokument | Datum der Veröffentlichung | Mitglied(er) der Patentfamilie | Datum der Veröffentlichung |
|---|---|---|---|
| US 2020358187 A1 | 12-11-2020 | US 10461421 B1 | 29-10-2019 |
| | | US 10594034 B1 | 17-03-2020 |
| | | US 10637142 B1 | 28-04-2020 |
| | | US 10700427 B1 | 30-06-2020 |
| | | US 10707578 B1 | 07-07-2020 |
| | | US 10811771 B1 | 20-10-2020 |
| | | US 11189921 B1 | 30-11-2021 |
| | | US 2020358183 A1 | 12-11-2020 |
| | | US 2020358185 A1 | 12-11-2020 |
| | | US 2020358187 A1 | 12-11-2020 |
| | | US 2020358188 A1 | 12-11-2020 |
| | | US 2021005966 A1 | 07-01-2021 |
| | | US 2021151884 A1 | 20-05-2021 |
| | | US 2022006190 A1 | 06-01-2022 |
| | | US 2022045425 A1 | 10-02-2022 |
| | | US 2022052450 A1 | 17-02-2022 |
| | | US 2022094058 A1 | 24-03-2022 |
| | | US 2022115783 A1 | 14-04-2022 |
| | | US 2022255224 A1 | 11-08-2022 |
| | | US 2023232251 A1 | 20-07-2023 |
| | | US 2023261377 A1 | 17-08-2023 |
| | | US 2023268651 A1 | 24-08-2023 |
| | | US 2023299481 A1 | 21-09-2023 |
| | | US 2023378645 A1 | 23-11-2023 |
| | | US 2024136709 A1 | 25-04-2024 |
| | | US 2024136710 A1 | 25-04-2024 |
| | | US 2024178560 A1 | 30-05-2024 |
| | | US 2024236712 A1 | 11-07-2024 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 8988279 B2
- US 10788578 B2
- US 9553363 B2

- US 10334454 B2
- US 10656234 B2
- US 7728769 B2


**In der Beschreibung aufgeführte Nicht-Patentliteratur**

- **J. DEFORD** ; **O. GANDHI**. Phase-Only Synthesis of Minimum Peak Sidelobe Patterns for Linear and Planar Arrays. *IEEE Transactions on Antennas and Propagation*, February 1988, vol. 36 (2), 191-201
- **A. DENSMORE** ; **Y. RAHMAT-SAMII**. Particle Swarm Optimized Three-Parameter Aperture Distribution for Antenna Synthesis. *IEEE Antennas and Propagation Society International Symposium*, 2010, 1-4
- **F. CASTELLA** ; **J. KUTTLER**. Optimised array antenna nulling with phase-only control. *IEE Proceedings F (Radar and Signal Processing)*, June 1991, vol. 138, 241-246
- **F. CASTELLA** ; **D. MARABLE**. Optimized planar array antenna nulling with phase-only control. *23rd European Microwave Conference*, 1993, 886-888
- **S. SMITH**. Optimum Phase-Only Adaptive Nulling. *IEEE Transactions on Signal Processing*, July 1999, vol. 47 (7), 1835-1843
- **O. BUCCI** ; **G. D'ELIA** ; **G. ROMITO**. Synthesis technique for scanning and/or reconfigurable beam reflector antennas with phase-only contro. *IEE Proceedings - Microwaves, Antennas and Propagation*, October 1996, vol. 143, 402-412
- **O. BUCCI** ; **G. D'ELIA**. Power synthesis of reconfigurable conformal arrays with phase-only control. *IEE Proceedings - Microwaves, Antennas and Propagation*, February 1998, vol. 145, 131-136
- **O. BUCCI** ; **G. D'ETIA** ; **G. ROMITO**. Optimal Synthesis of Reconfigurable Conformal Arrays with Phase Only Contro. *IEEE Antennas and Propagation Society International Symposium. 1996 Digest*, 1996, vol. 2, 810-813
- **A. TRASTOY** ; **F. ARES**. Phase-only synthesis of continuous linear aperture distribution patterns with asymmetric side lobes. *Electronics Letters*, October 1998, vol. 34 (20), 1916-1917

- **S.-M. LIN** ; **Y.-Q. WANG** ; **P.-L. SHEN**. Phase-only Synthesis of the Shaped Beam Patterns for the Satellite Planar Array Antenna. *IEEE International Conference on Phased Array Systems and Technology*, 2000, 331-334
- **A. CAPOZZOLI** ; **C. CURCIO** ; **G. D'ELIA** ; **A. LISENO** ; **D. BRESCIANI** ; **H. LEGAY**. Fast Phase-Only Synthesis of Faceted Reflectarrays. *in 3rd European Conference on Antennas and Propagation*, 2009, 1329-1333
- **A. CAPOZZOLI** ; **C. CURCIO** ; **G. D'ELIA** ; **A. LISENO**. Fast phase-only synthesis of conformal reflectarrays. *IET Microwaves, Antennas & Propagation,*, December 2010, vol. 4, 1989-2000
- **S. KATOCH** ; **S. S. CHAUHAN** ; **V. KUMAR**. A review on genetic algorithm: past, present, and future. *Multimedia Tools and Applications,*, October 2021, vol. 80, 8091-8126
- **R. HAUPT**. Phase-only adaptive nulling with a genetic algorithm. *IEEE Transactions on Antennas and Propagation*, June 1997, vol. 45 (6), 1009-1015
- **K. SABET** ; **D. JONES** ; **J.-C. CHENG** ; **L. KATEHI** ; **K. SARABAUDI** ; **J. HARVEY**. Efficient printed antenna array synthesis including coupling effects using evolutionary genetic algorithms. *IEEE Antennas and Propagation Society International Symposium,*, 1999, vol. 3, 2084-2087
- **Y. FAN** ; **R. JIN** ; **B. LIU** ; **J. GENG**. Phase-only Pattern Synthesis of Antenna Arrays Based on A Modified Genetic Algorithm. *in Proceedings of ISAP'*, 04 August 2004
- **A. CAPOZZOLI** ; **G. D'ELIA**. Global Optimization and Antenna Synthesis and Diagnosis, Part Two: Applications to Advanced Reflector Antennas Synthesis and Diagnosis Techniques. *Progress In Electromagnetics Research (PIER)*, 2006, vol. 56, 233-261

- **B. KADRI** ; **M. BOUSSAHLA** ; **F. T. BENDIMERAD**. Phase-Only Planar Antenna Array Synthesis with Fuzzy Genetic Algorithms. *IJCSI International Journal of Computer Science Issues,*, January 2010, vol. 7 (2), 72-77
- The Theory and Practice of Simulated Annealing. **D. HENDERSON** ; **S. H. JACOBSON** ; **A. W. JOHNSON**. Handbook of Metaheuristics. MA: Springer, 2003, 287-319
- **A. TRASTOY** ; **F. ARES** ; **E. MORENO**. Phase-Only Control of Antenna Sum and Shaped Patterns Through Null Perturbation. *EEE Antennas and Propagation Magazine*, December 2001, vol. 43 (6), 45-54
- **A. TRASTOY** ; **F. ARES** ; **E. MORENO**. Phase-Only Synthesis of Non-φ-Symmetric Patterns for Reflectarray Antennas with Circular Boundary. *IEEE Antennas and Wireless Propagation Letters*, 2004, vol. 3, 246-248
- **A. G. GAD**. Particle Swarm Optimization Algorithm and Its Applications: A Systematic Review. *Archives of Computational Methods in Engineering*, April 2022, vol. 29, 2531-2561
- **J. ROBINSON** ; **S. SINTON** ; **Y. RAHMAT-SAMII**. Particle Swarm, Genetic Algorithm, and their Hybrids: Optimization of a Profiled Corrugated Horn Antenna. *IEEE Antennas and Propagation Society International Symposium,*, 2002, vol. 1, 314-317
- **S. XU** ; **Y. RAHMAT-SAMII**. Multi-objective Particle Swarm Optimization for High Performance Array and Reflector Antennas. *IEEE Antennas and Propagation Society International Symposium,*, 2006, 3293-3296
- **A. DENSMORE** ; **Y. RAHMAT-SAMII**. Particle Swarm Optimized Three-Parameter Aperture Distribution for Antenna Synthesis. *IEEE Antennas and Propagation Society International Symposium,*, 2010, 1-4
- **TOSI, L** ; **ANSELMI, N.** ; **POLO, A.** ; **ROCCA, P**. Array Antenna Power Pattern Analysis Through Quantum Computing. *16th European Conference on Antennas and Propagation (EuCAP*, 2022, vol. S, ISBN 978-1-6654-1604-7, 1-3
- A Fast Quantum Mechanical Algorithm for Database Search. **L. K. GROVER**. in Proceedings of the Twenty-Eighth Annual ACM Symposium on Theory of Computing. Association for Computing Machinery, 1996, 212-219
- **M. A. NIELSEN** ; **I. L. CHUANG**. Quantum Computation and Quantum Information: 10th Anniversary Edition.. Cambridge University Press, 2010
- **M. A. NIELSEN** ; **I. L. CHUANG**. Quantum Computation and Quantum Information: 10th Anniversary Edition. Cambridge University Press, 2010
- **T. G. DRAPER**. *Addition on a Quantum Computer*, 2000, https://arxiv.org/pdf/quant-ph/0008033.pdf